# EUROPEAN PATENT APPLICATION

(11) **EP 2 876 632 A1**
(43) Date of publication of application: **27.05.2015**
(21) Application number: 14192666.7
(22) Date of filing: 11.11.2014
(51) Int. Cl.: G09G 3/00, G09G 3/20, G09G 3/32

(54) **Organic light emitting display and driving method thereof**

(30) Priority: 20.11.2013 KR 20130141122
(71) Applicant: Samsung Display Co., Ltd., Yongin-City, Gyeonggi-Do, 446-711 (KR)
(72) Inventor: Kim, Do-Ik, Yongin-si, Gyeonggi -do (KR)
(74) Representative: Gulde & Partner

(57) **Abstract**

An organic light emitting display includes: pixels (140) respectively positioned in areas defined by scan lines (S1 to Sn) and data lines (D1 to Dm); a scan driver (110) configured to non-sequentially supply a scan signal to the scan lines (S1 to Sn), and to control a signal supplied by a first control line (CL) commonly coupled to the pixels (140) so that the pixels (140) are set in a non-emission state during a first period that is a partial period of an i (i is a natural number) frame and during a first period that is a partial period of an (i+2) frame; a data driver (120) configured to supply a left data signal to the data lines (D1 to Dm) during the i frame and during an (i+ ) frame, and to supply a right data signal to the data lines during the (i+2) frame and during an (i+3) frame; and a timing controller (150) configured to control the scan driver (110) and the data driver (120), and to supply data to the data driver (120), wherein each of the (i+1) frame and the (i+3) frame is a period shorter than that of the i frame.

## Description

### CROSS-REFERENCE TO RELATED APPLICATION

This application claims priority to and the benefit of Korean Patent Application No. 10-2013-0141122, filed on November 20, 2013, in the Korean Intellectual Property Office.

### BACKGROUND

### 1. Field

An aspect of the present invention relates to an organic light emitting display and a driving method thereof.

### 2. Description of the Related Art

With the development of information technologies, the importance of a display that is a connection medium to the information is increased. Accordingly, flat panel displays (FPDs) such as liquid crystal displays (LCDs), organic light emitting displays and plasma display panels (PDPs) are increasingly used.

Among these FPDs, an organic light emitting display displays images using (utilizing) organic light emitting diodes that emit light through recombination of electrons and holes. The organic light emitting display has a fast response speed and is driven with low power consumption.

### SUMMARY

Aspects of embodiments are directed toward an organic light emitting display and a driving method thereof, which can improve display quality.

According to an embodiment of the present invention, there is provided an organic light emitting display including: pixels respectively positioned in areas defined by scan lines and data lines; a scan driver configured to non-sequentially supply a scan signal to the scan lines, and to control a signal supplied by a first control line commonly coupled to the pixels so that the pixels are set in a non-emission state during a first period that is a partial period of an i (i is a natural number) frame and during a first period that is a partial period of an (i+2) frame; a data driver configured to supply a left data signal to the data lines during the i frame and during an (i+1) frame, and to supply a right data signal to the data lines during the (i+2) frame and during an (i+3) frame; and a timing controller configured to control the scan driver and the data driver, and to supply data to the data driver, wherein each of the (i+1) frame and the (i+3) frame is a period shorter than that of the i frame.

The organic light emitting display may further include a storage unit configured to store data corresponding to at least one image, and to supply the stored data to the timing controller.

The storage unit may be positioned inside the timing controller.

The i frame and the (i+2) frame may have a same period length.

The scan driver may be configured to control the signal supplied to the first control line so that the pixels are in an emission state during a second period of the i frame, during the (i+1) frame, during a second period of the (i+2) frame, and during the (i+3) frame.

The organic light emitting display may further include shutter glasses wherein light is supplied to a left side of the shutter glasses during the second period of the i frame and during the (i+1) frame, and light is supplied to a right side of the shutter glasses during the second period of the (i+2) frame and during the (i+3) frame.

The first period may be a period in which a pixel of the pixels having a left data signal stored therein and a pixel of the pixels having a right data signal stored therein are mixed.

The (i+1) frame may have a period length equal to the first period of the i frame.

The (i+3) frame may have a period length equal to the first period of the (i+2) frame.

The scan driver may be configured to supply the scan signal in a same order as that of the first period of the i frame during the (i+1) frame, and the data driver may be configured to supply same data signals during the first period of the i frame and the (i+1) frame.

The scan driver may be configured to supply the scan signal in a same order as that of the first period of the (i+2) frame during the (i+3) frame, and the data driver may be configured to supply same data signals during the first period of the (i+2) and the (i+3) frame.

The data driver may be configured to supply, as left and right data signals, a first data signal where the pixels emit light or a second data signal where the pixels do not emit light.

Each pixel may include: an organic light emitting diode having a cathode electrode coupled to a second power source; a pixel circuit configured to control whether current is supplied from a first power source to the organic light emitting diode, according to left and right data signals; and a first transistor coupled between the cathode electrode of the organic light emitting diode and the second power source, the first transistor configured to be turned off during the first period, according to a first control signal supplied to the first control line.

The scan driver may be configured to supply a second control signal to a second control line coupled to the pixels and to alternately supply the first and second control signals.

Each pixel may further include a fourth transistor coupled between the first power source and the cathode electrode of the organic light emitting diode, the fourth transistor configured to be alternately turned on and turned off with the first transistor, corresponding to the second control signal.

Each pixel may include: an organic light emitting diode having a cathode electrode coupled to a second power source; a pixel circuit having a driving transistor configured to control whether current is supplied from a first power source to the organic light emitting diode, according to left and right data signals, and a storage capacitor coupled between a gate electrode of the driving transistor and the first power source, the storage capacitor being configured to store left and right data signals; and a first transistor coupled in parallel to the storage capacitor between the gate electrode of the driving transistor and the first power source, the first transistor being configured to turn on during the first period, corresponding to the signal supplied to the first control line.

According to another embodiment of the present invention, there is provided a method of driving an organic light emitting display, the method including: supplying a left data signal during an i (i is a natural number) frame and during an (i+1) frame shorter than the i frame; and supplying a right data signal during an (i+2) frame and during an (i+3) frame shorter than the (i+2) frame, wherein pixels are in a non-emission state during a first period that is a partial period of the i frame and during a first period that is a partial period of the (i+2) frame.

The i frame and the (i+2) frame may have a same period length.

The (i+1) frame may have a period length equal to the first period of the i frame.

A same data signal may be supplied during the first period of the i frame and the (i+1) frame.

The (i+3) frame may have a period length equal to the first period of the (i+2) frame.

A same data signal may be supplied during the first period of the (i+2) frame and the (i+3) frame.

Light may be supplied to a left side of shutter glasses during a second period of the i frame and during the (i+1) frame, and light may be supplied to a right side of the shutter glasses during a second period of the (i+2) frame and during the (i+3) frame.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a diagram illustrating an organic light emitting display according to an embodiment of the present invention.
FIG. 2 is a circuit diagram illustrating a pixel according to an embodiment of the present invention.
FIG. 3 is a circuit diagram illustrating a pixel according to another embodiment of the present invention.
FIG. 4 is a circuit diagram illustrating a pixel according to still another embodiment of the present invention.
FIG. 5 is a diagram illustrating a digital driving method according to an embodiment of the present invention.
FIGS. 6 and 7 are diagrams illustrating a three-dimensional (3D) driving method according to embodiments of the present invention.

### DETAILED DESCRIPTION

Hereinafter, certain example embodiments according to the present invention will be described with reference to the accompanying drawings. Here, when a first element is described as being coupled to a second element, the first element may be not only directly coupled to the second element but may also be indirectly coupled to the second element via one or more third elements. Further, some of the elements that may not be essential to the complete understanding of the present invention may be omitted for clarity. Also, like reference numerals refer to like elements throughout.

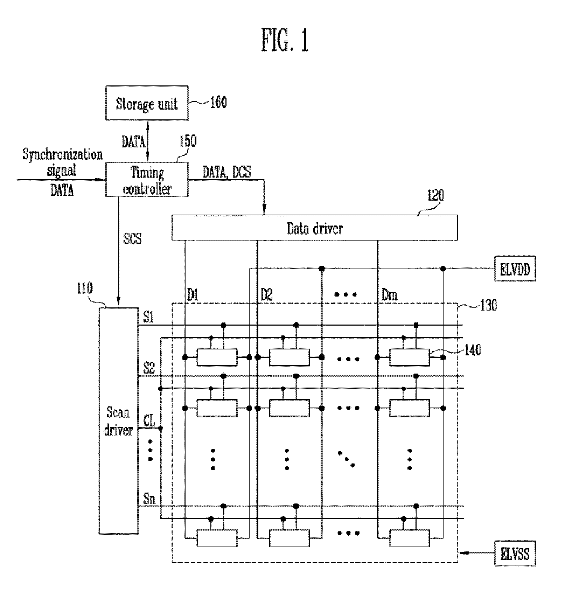

FIG. 1 is a diagram illustrating an organic light emitting display according to an embodiment of the present invention.

Referring to FIG. 1, the organic light emitting display according to this embodiment includes a pixel unit 130 configured to include pixels 140 positioned in an area defined by scan lines S1 to Sn and data lines D1 to Dm (e.g., at crossings of the scan lines and the data lines), a scan driver 110 configured to drive the scan lines S1 to Sn and a first control line CL, a data driver 120 configured to drive the data lines D1 to Dm, a storage unit 160 configured to store a data DATA corresponding to at least one screen, and a timing controller 150 configured to control the scan driver 110, the data driver 120 and the storage unit 160.

The timing controller 150 generates a scan driving control signal SCS and a data driving control signal DCS, corresponding to synchronization signals supplied from an outside thereof. The scan driving control signal SCS generated in the timing controller 150 is supplied to the scan driver 110, and the data driving control signal DCS generated in the timing controller 150 is supplied to the data driver 120. The timing controller 150 stores a data DATA in the storage unit 160 corresponding to at least one screen supplied from the outside. Here, in some embodiments, the data DATA stored in the storage unit 160 includes left and right data, corresponding to a 3D image. The timing controller 150 supplies the data DATA stored in the storage unit 160, in accordance with a driving method according to embodiments of the present invention. Additionally, although it has been illustrated in FIG. 1 that the storage unit 160 is positioned at the outside of the timing controller 150, the present invention is not limited thereto. For example, the storage unit 160 may be installed inside the timing controller 150.

The scan driver 110 supplies a scan signal to the scan lines S1 to Sn, in accordance with the scan driving control signal SCS. Here, the scan driver 110 non-sequentially supplies a scan signal to the scan lines S1 to Sn, in accordance with the driving method according to embodiments of the present invention. A driving method of embodiments of the present invention, in which a scan signal is non-sequentially supplied to the scan lines S1 to Sn, will be described later. When the scan signal is supplied to anyone of the scan lines S1 to Sn, pixels 140 positioned at a corresponding horizontal line are selected.

The scan driver 110 supplies a first control signal to the first control line CL, corresponding to the scan driving control signal SCS. The first control line CL is commonly coupled to the pixels 140 (e.g., coupled to each pixel 140), and accordingly, the first control signal supplied to the first control line CL is supplied to all the pixels 140. In some embodiments, in one frame, the scan driver 110 does not supply the first control signal to the first control line CL during a partial period (e.g., a first period) in which left and right data signals are mixed and displayed, but supplies the first control signal to the first control line CL during another period (e.g., a second period). The pixels 140 are set in a non-emission state during the first period in which the first control signal is not supplied to the first control line CL. The pixels 140 emit or do not emit light, according to a data signal, during the second period in which the first control signal is supplied.

The data driver 120 supplies a data signal to the data lines D1 to Dm, according to the data driving control signal DCS. Here, the data driver 120 supplies a data signal corresponding to (e.g., controlling) the emission or non-emission of the pixels 140. For example, when the data driver 120 supplies a first data signal, a corresponding pixel emits light (corresponding to the scan signal) and when the data driver 120 supplies a second data signal, the corresponding pixel does not emit light. The data signal supplied from the data driver 120 may be divided into left and right data signals, corresponding to a 3D driving method according to embodiments of the present invention.

The pixel unit 130 receives power from first and second power sources ELVDD and ELVSS that are supplied from an outside thereof, to supply the received power from the first and second power sources ELVDD and ELVSS to each pixel 140. Each pixel 140 implements a set gray scale (e.g., a predetermined gray scale) while supplying current to an organic light emitting diode (e.g., emission) corresponding to the data signal, or not supplying the current to the organic light emitting diode (e.g., non-emission). That is, the organic light emitting display of embodiments of the present invention is driven using a digital method, and a set gray scale (e.g., a predetermined gray scale) is implemented by controlling the emission time of each pixel 140.

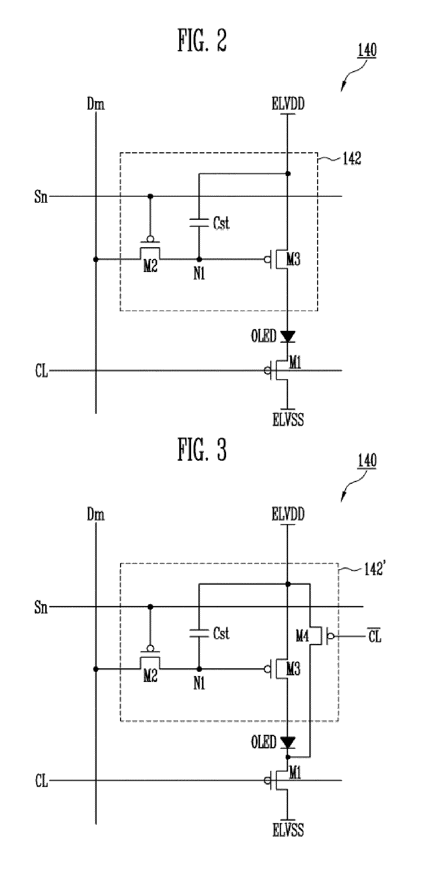

FIG. 2 is a circuit diagram illustrating a pixel according to an embodiment of the present invention. For convenience of illustration, a pixel 140 positioned on an n-th horizontal line and an m-th vertical line will be shown in FIG. 2.

Referring to FIG. 2, the pixel 140 according to this embodiment includes an organic light emitting diode OLED, a pixel circuit 142 coupled to a data line Dm and a scan line Sn to control the organic light emitting diode OLED, and a first transistor M1 coupled between a cathode electrode of the organic light emitting diode OLED and the second power source ELVSS.

An anode electrode of the organic light emitting diode OLED is coupled to the pixel circuit 142, and the cathode electrode of the organic light emitting diode OLED is coupled to the second power source ELVSS via the first transistor M1. The organic light emitting diode OLED is set in an emission state when current is supplied from the pixel circuit 142, and set in a non-emission state when the current is not supplied.

The first transistor M1 is coupled between the cathode electrode of the organic light emitting diode OLED and the second power source ELVSS. A gate electrode of the first transistor M1 is coupled to a first control line CL. The first transistor M1 is turned on when a first control signal is supplied to the first control line CL, and turned off when the first control signal is not supplied. Thus, the organic light emitting diode OLED and the second power source ELVSS are electrically decoupled from each other during a first period in which the first control signal is not supplied to the first control line CL in one frame, and accordingly, the pixel 140 is set in the non-emission state.

The pixel circuit 142 receives a data signal from the data line Dm when a scan signal is supplied to the scan line Sn, and controls whether or not current is supplied to the organic light emitting diode OLED, corresponding to the received data signal. To this end, the pixel circuit 142 includes a second transistor M2, a third transistor M3 and a storage capacitor Cst.

A first electrode of the second transistor M2 is coupled to the data line Dm, and a second electrode of the second transistor M2 is coupled to a first node N1. A gate electrode of the second transistor M2 is coupled to the scan line Sn. The second transistor M2 is turned on when the scan signal is supplied to the scan line Sn, to allow the data line Dm and the first node N1 to be electrically coupled to each other. When the second transistor M2 is turned on, the data signal from the data line Dm is supplied to the first node N1.

The storage capacitor Cst is coupled between the first power source ELVDD and the first node N1. The storage capacitor Cst stores a voltage corresponding to the data signal.

A first electrode of the third transistor M3 is coupled to the first power source ELVDD, and a second electrode of the third transistor M3 is coupled to the anode electrode of the organic light emitting diode OLED. A gate electrode of the third transistor M3 is coupled to the first node N1. The third transistor M3 controls whether current is supplied to the organic light emitting diode OLED while being turned on or turned off corresponding to the voltage of the data signal, which is stored in the storage capacitor Cst.

In embodiments of the present invention, the structure of the pixel circuit 142 is not limited to that of FIG. 2. For example, the pixel circuit 142 may be implemented with various kinds of circuits currently known in the art.

FIG. 3 is a circuit diagram illustrating a pixel according to another embodiment of the present invention. In FIG. 3, components similar to those of FIG. 2 are designated by like reference numerals, and their detailed descriptions will be omitted.

Referring to FIG. 3, the pixel according to this embodiment includes the organic light emitting diode OLED and a pixel circuit 142' configured to control whether or not current is supplied to the organic light emitting diode OLED.

The pixel circuit 142' further includes a fourth transistor M4 coupled between the first power source ELVDD and the cathode electrode of the organic light emitting diode OLED. A gate electrode of the fourth transistor M4 is coupled to a second control line /CL (i.e., CL bar). Here, the second control line /CL receives a second control signal supplied from the scan driver 110.

In some embodiments, the scan driver 110 supplies the second control signal to the second control line /CL during the first period in the one frame, and does not supply the second control signal to the second control line /CL during the second period in the one frame. That is, the first and second control signals are alternately supplied so as not to overlap with each other. Here, the second control line /CL is commonly coupled to the pixels 140 (i.e., coupled to each pixel 140).

Since the first and second control signals are alternately supplied so as not to overlap with each other, the fourth and first transistors M4 and M1 are alternately turned on and turned off. When the second control signal is supplied during the first period, the fourth transistor M4 is turned on. When the fourth transistor M4 is turned on, the voltage of the first power source ELVDD is supplied to the cathode electrode of the organic light emitting diode OLED. When the voltage of the first power source ELVDD is supplied to the cathode electrode of the organic light emitting diode OLED, the organic light emitting diode OLED is set in the non-emission state.

More specifically, the first transistor M1 is set in the turn-off state so that the organic light emitting diode OLED and the second power source ELVSS are decoupled from each other. In this case, the organic light emitting diode OLED is set in the non-emission state. In some embodiments, although the first transistor M1 is turned on, the emission state of the organic light emitting diode OLED is maintained for a set period (e.g., a predetermined period) by a parasitic capacitor included in the organic light emitting diode OLED.

In this embodiment, when the voltage of the first power source ELVDD is supplied to the cathode electrode of the organic light emitting diode OLED, using the fourth transistor M4 during the first period, the organic light emitting diode OLED is immediately set in the non-emission state. That is, in this embodiment, the organic light emitting diode OLED is set in the non-emission state within a fast time (e.g., quickly), using the fourth transistor M4, and accordingly, it is possible to improve display quality.

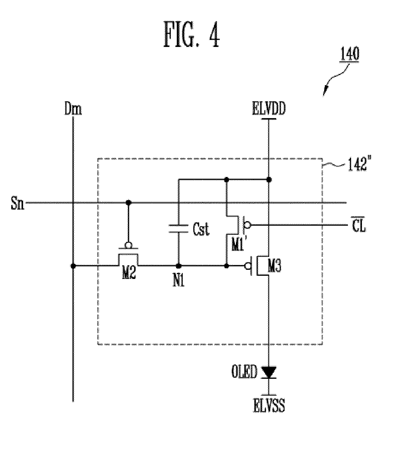

FIG. 4 is a circuit diagram illustrating a pixel according to still another embodiment of the present invention. In FIG. 4, components similar to those of FIG. 3 are designated by like reference numerals, and their detailed descriptions will be omitted.

Referring to FIG. 4, the pixel according to this embodiment includes the organic light emitting diode OLED, and a pixel circuit 142" configured to control whether or not current is supplied to the organic light emitting diode OLED.

In this embodiment, a first transistor M1' is coupled between the first power source ELVDD and the first node N1. A gate electrode of the first transistor M1' is coupled to the second control line /CL. The first transistor M1' is turned on during the first period in which the second control signal is supplied to the second control line /CL, and turned off during the second period in which the second control signal is not supplied.

When the first transistor M1' is turned on, the voltage of the first power source ELVDD is supplied to the first node N1, and accordingly, the third transistor M3 is set in the turn-off state. That is, the pixel 140 is set in the non-emission state during the first period.

In a case where the structure of the pixel 140 is formed as shown in FIG. 4, the scan driver 110 is commonly coupled (e.g., also coupled) to the second control line /CL to supply the scan signal to the second control line /CL. In this case, the first control line CL is not coupled to the pixel 140. Accordingly, the first control line CL is not separately formed.

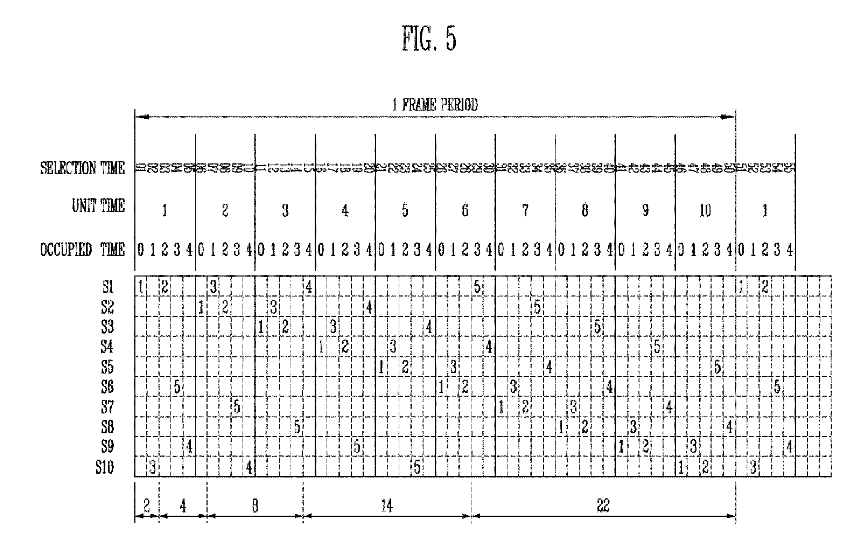

FIG. 5 is a diagram illustrating a digital driving method according to an embodiment of the present invention. In FIG. 5, it will be assumed that, for convenience of illustration, ten scan lines S1 to S10 are formed in the pixel unit 130.

In FIG. 5, the selection time refers to (e.g., means) a selection time of a minimum unit. During the selection time, a scan signal is supplied to any one scan line. The unit time is a time obtained by dividing one frame, based on a unit of controls. During the unit time, digital data signals having different weights are supplied to be synchronized with the scan signal. The occupied time is included similarly in each unit time, and refers to (e.g., means) a time when the digital data signal is supplied to a data line.

In the digital driving method of embodiments of the present invention, scan signals are supplied to different scan lines for each selection time. For example, during a first unit time, scan signals are sequentially supplied to the first, tenth, first, sixth and ninth scan lines S1, S10, S1, S6 and S9, respectively.

A digital data signal corresponding to a weight (e.g., a predetermined weight) is supplied to be synchronized with each scan signal. For example, digital data signals having weights of "1" and "2" may be sequentially supplied to be synchronized with the scan signal supplied to the first scan line S1 during the first unit time.

Here, the weight refers to (e.g., means) a time for which the pixel 140 emits light. For example, in a case where the digital data signal having the weight of "1" is supplied, the pixel 140 emits (or does not emit) light for (e.g., spanning) two selection times. In a case where the digital data signal having the weight of "2" is supplied, the pixel 140 emits (or does not emit) light for (e.g., spanning) four selection times.

That is, in the digital driving method of embodiments of the present invention, the gray scale of an image is implemented by non-sequentially selecting pixels during a unit time and supplying, to the selected pixels, a digital signal corresponding to a weight (e.g., a predetermined weight). In addition, an image (e.g., a predetermined image) is implemented while selectively changing the scan line receiving the data signal, corresponding to an increase of the unit time (1, 2, 3, ...) (e.g., the unit time is increased by "1", and the scan line is moved to S1 when the scan line is no less than S10). For example, during unit time 1, scan line S10 receives a weight of 3, but then during unit time 2, scan line S1 receives the weight of 3, while the other weights are shifted down one scan line.

The supply method of the data signal, shown in FIG. 5, corresponds to a specific pattern, but embodiments of the present invention are not limited thereto. Actually, embodiments of the present invention may be applied to all driving methods in which scan lines are non-sequentially selected during a unit time, and data signals having different weights are supplied to the selected scan lines.

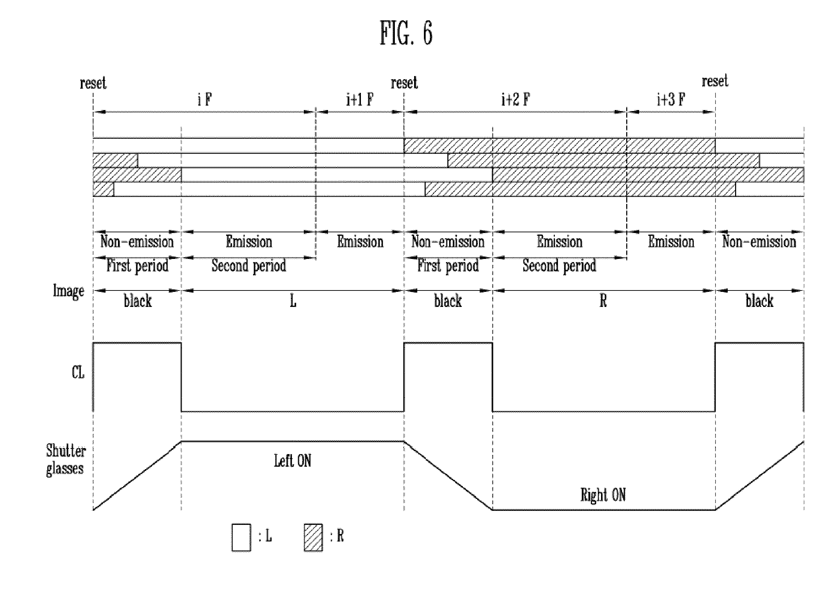

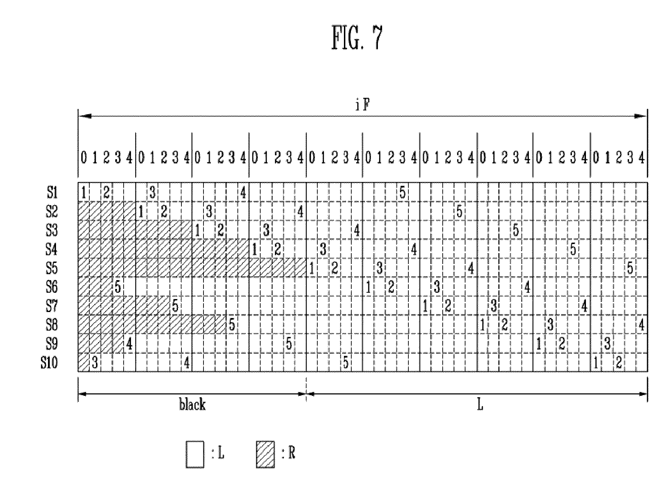

FIGS. 6 and 7 are diagrams illustrating a 3D driving method according to embodiments of the present invention. In FIGS. 6 and 7, an operating process will be described in conjunction with the pixel of FIG. 2.

Referring to FIGS. 6 and 7, embodiments of the present invention include four frames (i (i is a natural number), i+1, i+2 and i+3) in order to implement a 3D image.

The i frame iF and the (i+2) frame i+2F have the same period, and each of the i frame iF and the (i+2) frame i+2F includes a non-emission period (or first period) (e.g., black) and an emission period (or second period). Here, a left data signal is supplied as a data signal during the i frame iF, and a right data signal is supplied as a data signal during the (i+2) frame i+2F.

Each of the (i+1) frame i+1 F and the (i+3) frame i+3F is set to a period shorter than that of the i frame iF. For example, the (i+1) frame i+1 F is set to a period equal to the first period in the i frame, and the (i+3) frame i+3F is set to a period equal to the first period in the (i+2) frame i+2F. Here, a left data signal is supplied as a data signal during the (i+1) frame i+1 F, and a right data signal is supplied as a data signal during the (i+3) frame i+3F.

The driving process will be described in more detail. During the first period of the i frame iF, left and right data signals are mixed as shown in FIG. 7. Thus, the pixels 140 are set in the non-emission state during the first period of the i frame iF. That is, since each pixel 140 stores the left or right data signal during the first period, a desired 3D image cannot be implemented, and accordingly, the pixels 140 are set in the non-emission state during the first period.

The left data signal is supplied to be synchronized with the scan signal in the i frame iF, and accordingly, the first period in the i frame iF is set as a period shorter than the second period. The first control signal is supplied to the first control line CL during the second period in which only the left data signal is stored in the pixels 140, and accordingly, the pixels 140 are set in the emission (or non-emission) state, corresponding to a data signal of a corresponding weight.

Subsequently, light of gray scales included in the first period of the i frame iF is additionally emitted in the (i+1) frame i+1 F (with the supply of the first control signal). To this end, in the (i+1) frame i+1 F, the scan signal is supplied in the same order as that of the first period of the i frame iF, and the data signal of the same weight (the same data signal) is supplied. For example, in FIG. 7, the first scan line S1 receives data signals respectively corresponding to weights of "1", "2", "3" and "4" during the first period of the (i+1) frame i+1 F, and emits light corresponding to the data signals. However, since light corresponding to the data signal of the weight of "4" is partially emitted during the second period of the i frame iF, the light is emitted during a period in which the light is not emitted in the (i+1) frame i+1 F. Similarly, the third scan line S3 emits light, in response to a data signal corresponding to the weights of "1", "2" and "3" during the (i+1) frame i+1 F. The fifth scan line S5 emits light, in response to a data signal corresponding to a weight of "5" supplied during the second period of the i frame iF.

When the light of a gray scale, which is not emitted in the first period of the i frame iF, is additionally emitted during the (i+1) frame i+1 F, desired gray scales of the left data signal can all be implemented by the second period of the i frame iF and the (i+1) frame i+1 F. Here, light is supplied to the left side of shutter glasses during the second period of the i frame iF and the (i+1) frame i+1 F.

The pixels 140 are set in the non-emission state during the first period of the (i+2) frame i+2F, in which the left and right data signals are mixed. That is, since each pixel 140 stores the left or right data signal during the first period, a desired 3D image cannot be implemented, and accordingly, the pixels 140 are set in the non-emission state during the first period.

The right data signal is supplied to be synchronized with the scan signal in the (i+2) frame i+2F, and accordingly, the first period is set as a period shorter than the second period. The first control signal is supplied to the first control line CL during the second period of the (i+2) frame i+2F, in which only the right data signal is stored in the pixels 140, and accordingly, the pixels 140 are set in the emission (or non-emission) state, corresponding to a data signal of a corresponding weight.

Subsequently, light of gray scales included in the first period of the (i+2) frame i+2F is additionally emitted in the (i+3) frame i+3F (the supply of the first control signal). In other words, in the (i+3) frame i+3F, the scan signal is supplied in the same order as that of the first period of the (i+2) frame i+2F, and the data signal of the same weight (the same data signal) is supplied.

When the light of a gray scale, which is not emitted in the first period of the (i+2) frame i+2F, is additionally emitted during the (i+3) frame i+3F, desired gray scales of the right data signal can all be implemented by the second period of the (i+2) frame i+2F and the (i+3) frame i+3F. Here, light is supplied to the right side of the shutter glasses during the second period of the (i+2) frame i+2F and the (i+3) frame i+3F.

Then, a viewer wearing the shutter glasses recognizes, as a 3D image, left and right images input during the i frame iF to the (i+3) frame i+3F. That is, in embodiments of the present invention, the 3D image is implemented by repeating the process described above.

When the 3D image is implemented, the pixels 140 are set in the non-emission state during some periods of the i frame iF and the (i+2) frame i+2F among the consecutive four frames. That is, in embodiments of the present invention, it is possible to decrease (e.g., minimize) the non-emission period, which does not contribute to the emission of light when a 3D image is implemented, and accordingly, it is possible to improve gray scale expression performance. In embodiments of the present invention, each of the (i+1) frame i+1 F and the (i+3) frame i+3F is set shorter than the i frame iF, and accordingly, it is possible to decrease (e.g., minimize) a driving frequency.

Although it has been described in embodiments of the present invention that the transistors are shown as PMOS transistors for convenience of illustration, the present invention is not limited thereto. In other words, the transistors may be formed as NMOS transistors.

In embodiments of the present invention, the organic light emitting diode OLED may generate red, green and blue light, corresponding to the amount of current supplied from the driving transistor, or may generate white light, corresponding to the amount of the current supplied from the driving transistor. In a case where the organic light emitting diode OLED generates white light, a color image is implemented using (utilizing) a separate color filter or the like.

By way of summation and review, an organic light emitting display includes a plurality of pixels arranged in a matrix formed at intersection portions (e.g., crossings) of data lines, scan lines and power lines. Each pixel generally includes an organic light emitting diode, two or more transistors including a driving transistor, and one or more capacitors.

In the organic light emitting display, a left image is displayed in a first frame among consecutive four frames and a right image is displayed in a third frame among the consecutive four frames in order to implement a 3D image. Among the consecutive four frames, an image of black is displayed in second and fourth frames in which the left and right images are mixed.

In a case when shutter glasses are used, light is supplied to the left side of the shutter glasses during the first frame, and light is supplied to the right side of the shutter glasses during the third frame. In this case, a viewer wearing the shutter glasses recognizes, as a 3D image, the image supplied through the shutter glasses.

However, in a case where one screen (e.g., one image) is expressed using the consecutive four frames, a high driving frequency (e.g., 240Hz) may be used. In a case where a 3D image is implemented using the digital driving method, the number of sub-frames is limited by the high driving frequency, and therefore, the display quality is deteriorated.

In the organic light emitting display and the driving method thereof according to embodiments of the present invention, the pixels are set in the non-emission state during some periods of the first and third frames among the consecutive four frames, thereby displaying a 3D image. In this case, the non-emission time of the pixels is decreased (e.g., minimized), thereby improving gray scale expression performance. In addition, each of the second and fourth frames among the consecutive four frames is shorter (e.g., set shorter) than the first frame, and accordingly, it is possible to decrease (e.g., minimize) a driving frequency.

Example embodiments have been disclosed herein, and although specific terms are employed, they are used and are to be interpreted in a generic and descriptive sense only and not for purposes of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An organic light emitting display comprising:
pixels (140) respectively positioned in areas defined by scan lines (S1 to Sn) and data lines (D1 to Dm);
a scan driver (110) configured to non-sequentially supply a scan signal to the scan lines (S1 to Sn), and to control a signal supplied by a first control line (CL) commonly coupled to the pixels (140) so that the pixels (140) are set in a non-emission state during a first period that is a partial period of an i (i is a natural number) frame and during a first period that is a partial period of an (i+2) frame;
a data driver (120) configured to supply a left data signal to the data lines (D1 to Dm) during the i frame and during an (i+1) frame, and to supply a right data signal to the data lines (D1 to Dm) during the (i+2) frame and during an (i+3) frame; and
a timing controller (150) configured to control the scan driver (110) and the data driver (120), and to supply data to the data driver (120),
wherein each of the (i+1) frame and the (i+3) frame is a period shorter than that of the i frame.

2. The organic light emitting display of claim 1, wherein the scan driver (110) is configured to control the signal supplied to the first control line (CL) so that the pixels (140) are in an emission state during a second period of the i frame, during the (i+1) frame, during a second period of the (i+2) frame, and during the (i+3) frame.

3. The organic light emitting display of claim 2, further comprising shutter glasses wherein light is supplied to a left side of the shutter glasses during the second period of the i frame and during the (i+1) frame, and light is supplied to a right side of the shutter glasses during the second period of the (i+2) frame and during the (i+3) frame.

4. The organic light emitting display of one of the preceding claims , wherein the first period is a period in which a pixel of the pixels (140) having a left data signal stored therein and a pixel of the pixels (140) having a right data signal stored therein are mixed.

5. The organic light emitting display of one of the preceding claims, wherein the scan driver (110) is configured to supply the scan signal in a same order as that of the first period of the i frame during the (i+1) frame, and
wherein the data driver (120) is configured to supply same data signals during the first period of the i frame and the (i+1) frame.

6. The organic light emitting display of one of the preceding claims wherein the scan driver (110) is configured to supply the scan signal in a same order as that of the first period of the (i+2) frame during the (i+3) frame, and
wherein the data driver (120) is configured to supply same data signals during the first period of the (i+2) and the (i+3) frame.

7. The organic light emitting display of one of the preceding claims, wherein the data driver (120) is configured to supply, as left and right data signals, a first data signal where the pixels (140) emit light or a second data signal where the pixels do not emit light.

8. The organic light emitting display of one of the preceding claims, wherein each pixel (140) includes:
an organic light emitting diode (OLED);
a pixel circuit (142) configured to control whether current is supplied from a first power source (ELVDD) to the organic light emitting diode (OLED), according to left and right data signals; wherein the organic light emitting diode (OLED) has a cathode electrode coupled to a second power source (ELVSS); and
a first transistor (M1) coupled between the cathode electrode of the organic light emitting diode (OLED) and the second power source (ELVSS), the first transistor (M1) configured to be turned off during the first period, according to a first control signal supplied to the first control line (CL).

9. The organic light emitting display of claim 8, wherein the scan driver (120) is configured to supply a second control signal to a second control line (/CL) coupled to the pixels (140) and to alternately supply the first and second control signals.

10. The organic light emitting display of claim 9, wherein each pixel (140) further includes a fourth transistor (M4) coupled between the first power source (ELVDD) and the cathode electrode of the organic light emitting diode (OLED), the fourth transistor (M4) configured to be alternately turned on and turned off with the first transistor (M1), corresponding to the second control signal (/CL).

11. The organic light emitting display of one of the claims 1- 7, wherein each pixel (140) includes:
an organic light emitting diode (OLED) and a pixel circuit (142) having a first transistor (M1'), a driving transistor (M3) and a storage capacitor (Cst), wherein
the driving transistor (M3) is configured to control whether current is supplied from a first power source (ELVDD) to an organic light emitting diode (OLED, according to left and right data signals, and wherein the storage capacitor (Cst) is coupled between a gate electrode of the driving transistor (M3) and the first power source (ELVDD), the storage capacitor (Cst) being configured to store left and right data signals;
wherein the organic light emitting diode (OLED) has a cathode electrode coupled to a second power source (ELVSS); and
wherein the first transistor (M1') is coupled in parallel to the storage capacitor (Cst) between the gate electrode of the driving transistor (M4) and the first power source (ELVDD), the first transistor (M1') being configured to turn on during the first period, corresponding to the signal supplied to the first control line (CL).

12. A method of driving an organic light emitting display, the method comprising:
supplying a left data signal during an i (i is a natural number) frame and during an (i+1) frame shorter than the i frame; and
supplying a right data signal during an (i+2) frame and during an (i+3) frame shorter than the (i+2) frame,
wherein pixels are in a non-emission state during a first period that is a partial period of the i frame and during a first period that is a partial period of the (i+2) frame.

13. The method of claim 12, wherein a same data signal is supplied during the first period of the i frame and the (i+1) frame.

14. The method of claim 12 or 13, wherein a same data signal is supplied during the first period of the (i+2) frame and the (i+3) frame.

15. The method of one of the claims 12 - 14, wherein light is supplied to a left side of shutter glasses during a second period of the i frame and during the (i+1) frame, and light is supplied to a right side of the shutter glasses during a second period of the (i+2) frame and during the (i+3) frame.
